# EUROPÄISCHE PATENTSCHRIFT

(11) **EP 1 652 704 B1**
(45) Veröffentlichungstag und Bekanntmachung des Hinweises auf die Patenterteilung: **12.12.2007**
(21) Anmeldenummer: 04292584.2
(22) Anmeldetag: 29.10.2004
(51) Int. Cl.: B60H 1/22, F24H 3/04

(54) **Elektrische Heizungsanordnung, inbesondere für ein Kraftfahrzeug**
Electric heater assembly, especially for a motor vehicle
Ensemble de chauffage électrique, notamment pour véhicule automobile

(43) Veröffentlichungstag der Anmeldung: 03.05.2006
(73) Patentinhaber: Behr France Rouffach SAS, 68250 Rouffach (FR)
(72) Erfinder: Brun, Michel, 68740 Rustenhart (FR); Denny, Geoffrey, 68100 Mulhouse (FR); Eckerlen, Gerard, 68250 Rouffach (FR); Gogmos, Erwan, 56600 Lanester (FR); Miss, Pascal, 67600 Sélestat (FR); Mougey, Mathieu, 68190 Ensisheim (FR); Schmittheisler, Christophe, 67680 Epfig (FR)
(74) Vertreter: Grauel, Andreas

(56) Entgegenhaltungen:
- EP-A- 0 876 080
- EP-A- 0 901 311
- DE-A1- 10 144 757
- DE-A1- 10 241 763
- DE-U1- 20 218 331
- FR-A- 2 742 384

## Beschreibung

Die Erfindung betrifft eine elektrische Heizungsanordnung, insbesondere für ein Kraftfahrzeug, gemäß dem Oberbegriff des Anspruchs 1, und wie gezeigt in EP 0901311.

Aus der DE 101 44 757 A1 ist eine Heizungsanordnung mit einem PTC-Element für Personenfahrzeuge bekannt, wobei eine Zusatzheizung mit einem Heizkörper, der im Betrieb der Zusatzheizung von Heizluft durchströmt wird, und mit mindestens einer Luftaustrittsöffnung im Fußbereich eines Fahrgastraumes versehen ist, zu der die Heizluft geleitet wird. Um auf flexible Weise eine vertikale Temperaturschichtung im Fahrgastraum erzeugen zu können, die insbesondere auch an Sitzen im Fond als angenehm empfunden wird, ist der Heizkörper als ein elektrisches PTC-Element gestaltet, welches unmittelbar an der Luftaustrittsöffnung im Fußbereich angeordnet ist. Ein derartiger Zuheizer lässt noch Wünsche offen. Gemäß einem Ausführungsbeispiel ist ein PTC-Element in Gestalt mehrerer Heizwaben in einem nicht näher beschriebenen Kunststoff-Rahmen angeordnet, der die Luftaustrittsöffnung einfasst. Hierbei kann es zu Problemen bei der elektrischen Kontaktierung kommen.

Es ist Aufgabe der Erfindung, eine verbesserte elektrische Heizungsanordnung zur Verfügung zu stellen, die eine sichere elektrische Kontaktierung auch bei großem Stromdurchfluss ermöglicht.

Diese Aufgabe wird gelöst durch eine elektrische Heizungsanordnung mit den Merkmalen des Anspruchs 1. Vorteilhafte Ausgestaltungen sind Gegenstand der Unteransprüche.

Erfindungsgemäß ist eine elektrische Heizungsanordnung, für ein Kraftfahrzeug, mit einem mindestens zweiteiligen Gehäuse vorgesehen, durch welches im Bedarfsfall zu erwärmende Luft strömt, wobei mindestens ein elektrisch betreibbares Heizelement im Gehäuse angeordnet ist. Hierbei sind an mindestens zwei Stellen im Gehäuse Positionierungselemente für eine elektrische Kontaktierung vorgesehen sind, die elektrische Kontaktierung aber nur auf einer der Stellen angeordnet. Dadurch kann das Gehäuse mit leicht modifiziertem Heizelement für unterschiedliche Anwendungsfälle, die eine elektrische Kontaktierung von verschiedenen Seiten erfordem, verwendet werden, so dass nur ein Werkzeug für das Gehäuse vorgesehen werden muss und zudem die Lagerhaltung vereinfacht werden kann. Bevorzugt ist hierbei das Heizelement bezüglich seiner Mittelebene spiegelsymmetrisch ausgebildet, so dass es bei vertauschten Anschlussseiten einfach mit der Unterseite nach oben eingebaut werden kann. Die spiegelsymmetrische Ausgestaltung bezieht sich bevorzugt auch auf die elektrische Kontaktierung des Heizelements.

Das Gehäuse ist bevorzugt spiegelsymmetrisch bezüglich einer Mittelquerachse ausgebildet, und die Stellen mit Positionierungselementen für eine elektrische Kontaktierung sind bevorzugt beabstandet von der Mittelquerachse auf beiden Seiten des Gehäuses angeordnet. Mit einer derartigen Ausgestaltung sind die meisten Anwendungsfälle abgedeckt, da ein Kabel aus Bauraumgründen in der Regel um 90°, jedoch nicht immer 180° um das Gehäuse geführt werden kann.

Vorzugsweise ist die elektrische Kontaktierung des Heizelements mit einem Kabel, insbesondere mit einem Rundkabel, im Gehäuse angeordnet, die beiden Teile des Gehäuses sind insbesondere mittels mindestens einer Clipsverbindung miteinander verbunden, und die Clipsverbindung ist seitlich des elektrischen Heizelements im Bereich dessen elektrischer Kontaktierung angeordnet. Dabei unterstützen die im Bereich der elektrischen Kontaktierung vorgesehenen Clipsverbindungen den sicheren Zusammenhalt des Gehäuses und somit auch, dass sich die elektrischen Verbindungen auch bei einer gewissen Zugbelastung oder bei einer leichten Längsverschiebung des Heizelements nicht lösen, wobei vorzugsweise eine Kontakthülse, die Teil der elektrischen Kontaktierung ist, einen gewissen Längenausgleich ermöglicht.

Vorzugsweise sind im Bereich der elektrischen Kontaktierung vorgesehene Stege in das Gehäuse integriert, welche die elektrisch kontaktierenden Elemente fixieren und ein Lösen des elektrischen Kontakts verhindern, so dass eine sichere elektrische Kontaktierung möglich ist. Um Zugbelastungen am Kabel besser aufnehmen zu können, sind die Stege vorzugsweise in einem Winkel ungleich 0° und 90°, insbesondere in einem Winkel von 45° +/- 20°, insbesondere bevorzugt ca. 45°, zur Längsrichtung der Kontaktbleche angeordnet. Die Stege sind zudem bevorzugt schräg und versetzt bezüglich einer Kabeldurchführung für das Stromkabel angeordnet, so dass das durch eine Kabeldurchführung in das Gehäuse geführte Stromkabel mindestens an einer Stelle umgelenkt wird, wodurch Zugbelastungen aufgenommen werden können.

Die elektrische Kontaktierung zwischen Kontaktblech und Stromkabel, wobei es sich bevorzugt um ein Rundkabel handelt, erfolgt vorzugsweise mittels einer Kontakthülse und gegebenenfalls mittels eines Zwischenelements, das zwischen Kontaktblech und Kontakthülse angeordnet ist und das Kontaktblech verlängert. Dabei ist die Kontakthülse bevorzugt in Richtung der Stege verlaufend angeordnet.

Das elektrische Heizelement umfasst mindestens ein PTC-Element. Dabei sind vorzugsweise auf beiden Seiten des PTC-Elements Kontaktbleche angeordnet, welche der elektrischen Kontaktierung dienen. Die Verbindung zwischen Kontaktblechen und PTC-Element erfolgt vorzugsweise mittels einer Klebe-Verbindung.

Auf der dem PTC-Element abgewandten Seite des Kontaktblechs ist bevorzugt eine Wellrippe sowie gegebenenfalls weitere Kontaktbleche, PTC-Elemente und Wellrippen mittels Klebe-Verbindungen, welche vorzugsweise durch einen Zwei-Komponenten-Silikon-Klebstoff gebildet sind, angebracht.

Mindestens zwei Kontaktbleche sind derart ausgebildet, dass sie an ihrem einen Ende als Teil eines Steckers ausgebildet sind, welcher zur elektrischen Kontaktierung seitlich über die von Luft durchströmte Fläche mit Wellrippen hinausragt.

Das Gehäuse weist vorzugsweise mindestens eine isolierende Trennwand auf, welche sicherstellt, dass ein Kurzschluss innerhalb des elektrischen Heizelements, also insbesondere zwischen zwei nur von einem PTC-Element getrennten Kontaktblechen, vermieden wird. Die Trennwand ist hierbei bevorzugt sowohl am Gehäuseoberteil als auch am Gehäuseunterteil ausgebildet, so dass die Trennung der Kontaktbleche auch in einem seitlichen Bereich sichergestellt ist. Zudem können die Trennwände der Zentrierung des Gehäuseoberteils auf dem Gehäuseunterteil dienen.

Bevorzugt ist das Luftkanal-Gehäuse im Bereich, in welchem das elektrische Heizelement angeordnet ist, mindestens zweiteilig als Kunststoffgehäuse ausgebildet. Eine zweiteilige Ausgestaltung ermöglicht eine einfache und schnelle Montage bei guten Festigkeitseigenschaften. Ferner lässt sich das Gehäuse einfach mittels Spritzgießens herstellen. Die beiden Gehäuseteile sind bevorzugt mittels Clipsverbindungen, insbesondere auch auf der Gehäuseaußenseite, miteinander verbunden, so dass keine Verbindungselemente in den Innenraum ragen und den Strömungskanal beeinflussen.

Vorteilhafterweise ist eine erfindungsgemäße elektrische Heizungsanordnung, insbesondere als Zusatzheizung, für eine Kraftfahrzeug- Heizungs- und/oder Klimatisierungseinrichtung vorgesehen, wobei diese zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

Im Folgenden wird die Erfindung anhand eines Ausführungsbeispiels unter Bezugnahme auf die Zeichnung im Einzelnen erläutert. In der Zeichnung zeigen:
- Fig. 1: eine perspektivische Ansicht auf eine erfindungsgemäβe Heizungsanordnung mit geöffnetem Gehäuse,
- Fig. 2: eine Fig. 1 entsprechende Ansicht des Gehäuses,

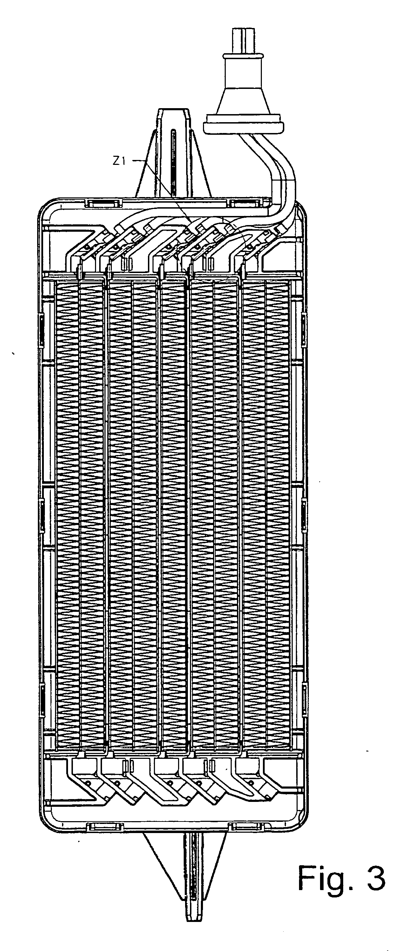

- Fig. 3: eine Draufsicht auf das offene Gehäuse mit der Heizungsanordnung,
- Fig. 4: eine Detaildarstellung des Bereichs Z1 von Fig. 3,

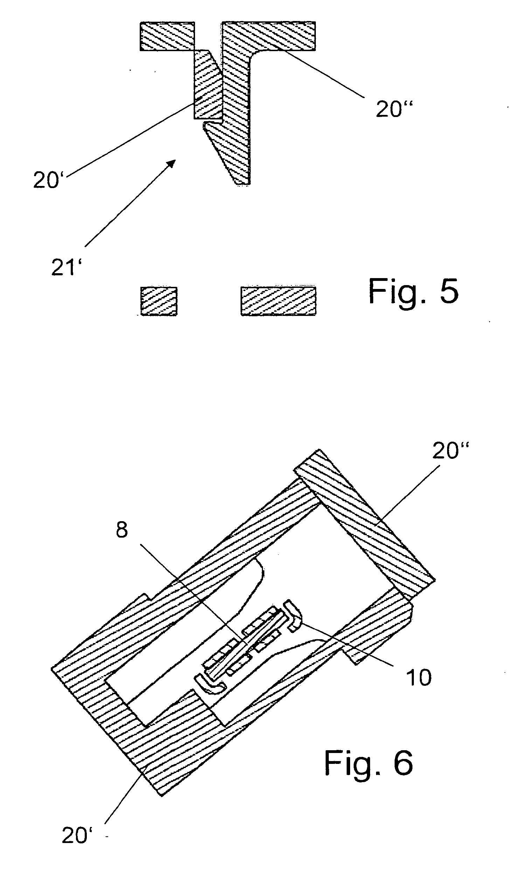

- Fig. 5: einen Schnitt entlang Linie A-A in Fig. 4,
- Fig. 6: einen Schnitt entlang Linie B-B in Fig. 4,
- Fig. 7: einen Schnitt entlang Linie C-C in Fig. 4,
- Fig. 8: einen Schnitt entlang Linie D-D in Fig. 4, und

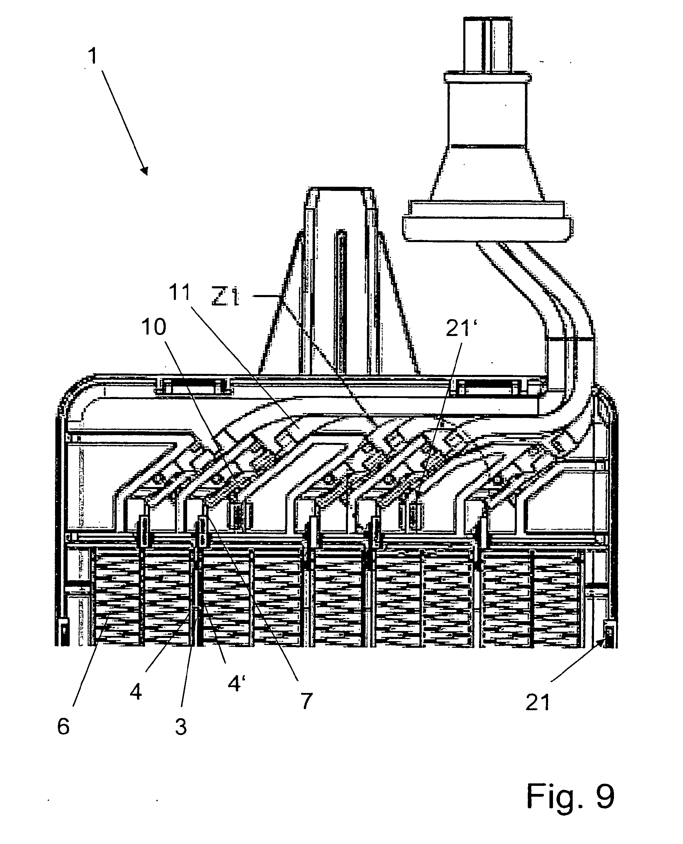

- Fig. 9: eine vergrößerte Darstellung des oberen Bereichs von Fig. 3.

Bei einer als Zuheizer dienenden PTC-Heizungsanordnung 1 einer Kraftfahrzeug-Klimaanlage mit mehreren ein elektrisches Heizelement 2 in Form eines Heizgitters bildenden PTC-Elementen 3 sind die PTC-Elemente 3 auf an sich bekannte Weise zwischen zwei Kontaktblechen 4, 4' eingeklebt, vorliegend mittels eines Zwei-Komponenten-Silikon-Klebstoffes, wobei eines der Kontaktbleche, in der Zeichnung mit dem Bezugszeichen 4' versehen, im Wesentlichen rechteckförmig ausgebildet ist und mit seinem seitlich über das PTC-Element 3 überstehenden Ende einen Teil eines elektrischen Kontakts 5 bildet. Das mit dem Bezugszeichen 4 bezeichnete Kontaktblech ist im Wesentlichen rechteckförmig ausgebildet und parallel zum anderen Kontaktblech 4' angeordnet.

Auf den jeweils dem PTC-Element 3 gegenüberliegenden Seiten der Kontaktbleche 4 und 4' sind mittels einer entsprechenden Klebe-Verbindung Wellrippen 6 angebracht und an diesen, ebenfalls wiederum mit einer entsprechenden Klebe-Verbindung je ein weiteres Kontaktblech 4 und 4', wobei diese Kontaktbleche den zuvor beschriebenen Kontaktblechen 4 und 4' entsprechen.

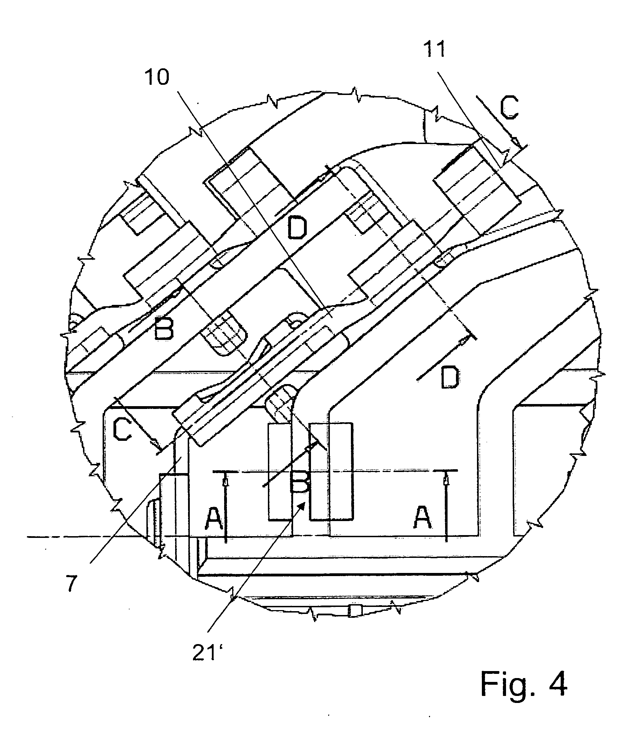

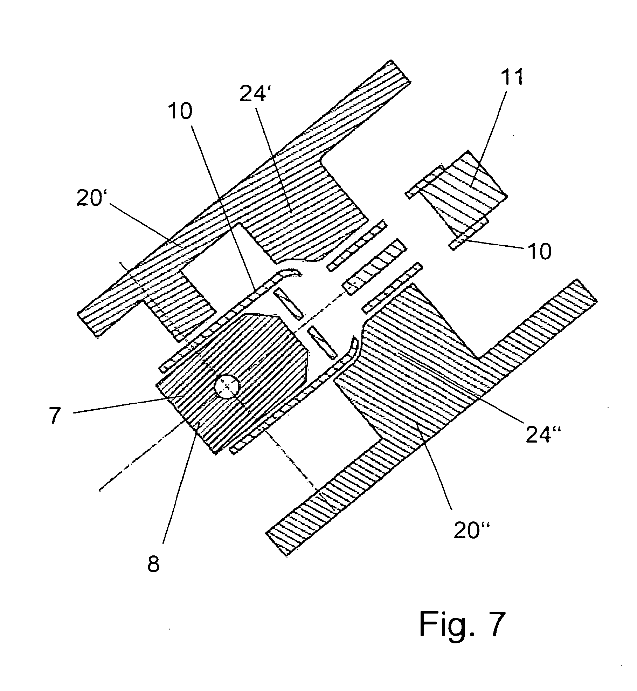

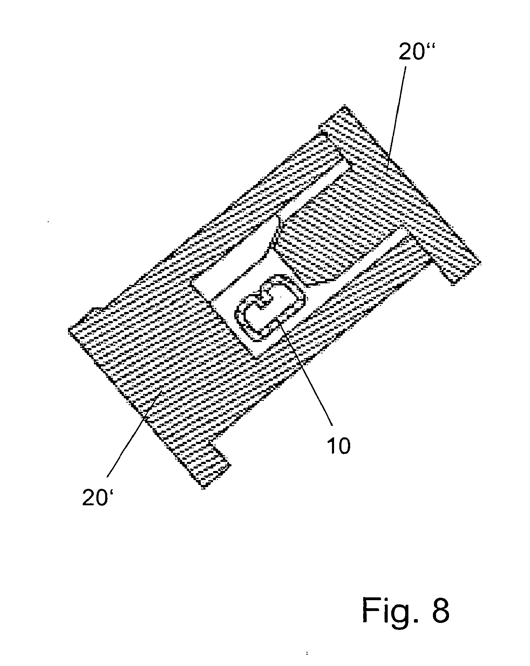

Für die Herstellung eines elektrischen Kontakts ist das verlängerte Kontaktblech 4' mit einem Zwischenelement 7 fest verbunden oder gegebenenfalls einstückig ausgebildet, welches etwas schmäler ausgebildet ist und eine in einem Winkel von 45° zum Kontaktblech 4' verlaufende Zunge 8 aufweist, auf welche elektrisch kontaktierend eine Kontakthülse 10 aufgeschoben ist, die auf der anderen Seite elektrisch kontaktierend fest mit einem Rundkabel 11 verbunden ist. Die Mittellängsachse des Zwischenelements 7 und dem Rundkabel 11 im in der Köntakthülse 10 eingespannten Bereich fluchten vorliegend miteinander (vgl. Fig. 4). Die Kontakthülse 10 ist ein metallisches Stanzbiegeteil und weist drei Bereiche 10', 10" und 10"' auf, wobei der erste Bereich 10' über die Zunge 8 geschoben ist und in dem elastisch verformbare Bereiche die von zumindest einer Flachseite her an der Zunge 8 federnd unter Vorspannung anliegen. Ferner sind zwischen dem ersten Bereich 10' und dem mittleren, zweiten Bereich 10" Endanschläge für die Zunge 8 vorgesehen (vgl. Fig. 7). Der mittlere, zweite Bereich 10" (vgl. Fig. 8) bildet den Übergang zum dritten Bereich 10"', in welchem die Kontakthülse 10 über das Rundkabel 11 geschoben ist.

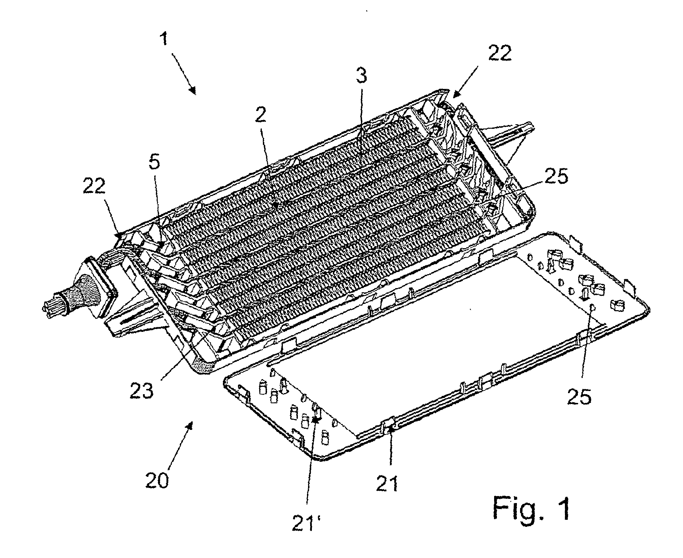

Um die zuvor beschriebene Anordnung herum ist ein zweiteiliges Kunststoff-Gehäuse 20 angeordnet, welches in einem Luftführungskanal der Kraftfahrzeug-Klimaanlage angeordnet ist. Dabei ist das Gehäuse 20 nicht mittig geteilt, sondern, wie beispielsweise aus Fig. 1 ersichtlich, das Gehäuseunterteil 20' bildet den größten Teil des Gehäuses 20, und das Gehäuseoberteil 20" ist im Wesentlichen als Deckel ausgestaltet, wobei die Ränder des Deckels leicht nach unten heruntergezogen sind. Diese Ausgestaltung der Gehäuseteile 20' und 20" hilft Zusammenbaufehler zu vermeiden. Das Gehäuse 20 ist vorliegend im Wesentlichen spiegelsymmetrisch zur Mittelquerachse ausgebildet, wobei jedoch die elektrische Kontaktierung vorliegend nur auf einer Seite erfolgt. Auf Grund der spiegelsymmetrischen Ausgestaltung kann die elektrische Kontaktierung entsprechend auch auf der anderen Seite vorgesehen sein, so dass ein Gehäuse 20 für verschiedene Anwendungen benutzt werden kann. Die Anordnung im Kraftfahrzeug ist vorliegend im Bereich unterhalb der vorderen Sitzreihe, so dass die Heizungsanordnung 1 die der zweiten Sitzreihe zugeführte Luft bei Bedarf erwärmt.

Die beiden Teile des Gehäuses 20 sind mittels Clipsverbindungen 21 unter Einlage des Heizelements 2 fest miteinander verbunden. Die Clipsverbindungen 21 ermöglichen zusätzlich eine Positionierung im Rahmen der Montage. Zur Durchführung der Rundkabel 11 sind im Bereich der Ecken in Längsrichtung offene Kabeldurchführungen 22 vorgesehen, wobei vorliegend nur eine der beiden spiegelsymmetrischen Kabeldurchführungen 22 für eine Kabeldurchführung verwendet ist (vgl. Fig. 1).

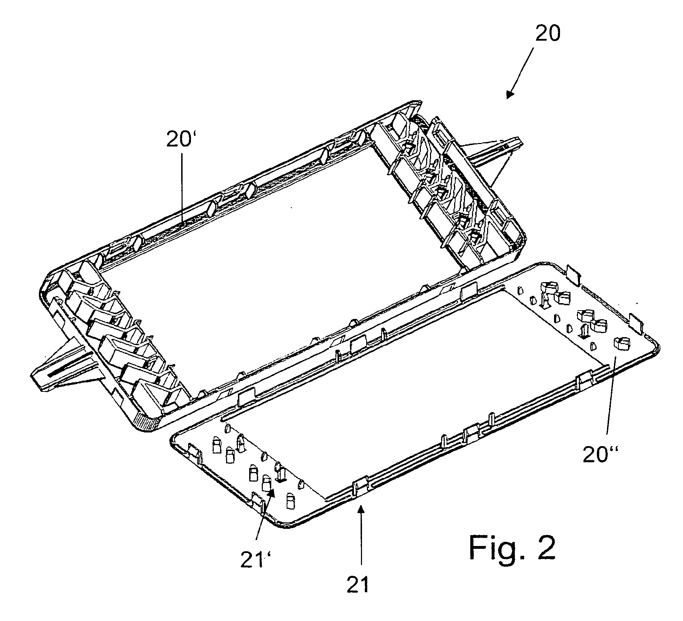

Im Bereich zwischen der elektrischen Kontaktierung der Kontaktbleche 4' und der elektrischen Kontaktierung der Rundkabel 11 sind am Gehäuseunterteil 20' und am Gehäuseoberteil 20" Positionierungselemente 23 ausgebildet, welche eine exakte Positionierung der entsprechenden Bereiche ermöglichen und diese im zusammengebauten Zustand des Gehäuses 20 sicher fixieren. Als Positionierungselemente 23 dienen vorstehende Stege 24' am Gehäuseunterteil 20'. Die Stege 24' am Gehäuseunterteil 20' sind entsprechend dem Verlauf der Zwischenelemente 7, also in einem 45°-Winkel abgewinkelt, ausgebildet (vgl. Fig. 2). Ferner sind zur Positionierung zwischen dem Gehäuseunterteil 20' und dem Gehäuseoberteil 20" weitere Stege 24' am Gehäuseunterteil 20' und Stege 24" am Gehäuseoberteil 20" vorgesehen, die im Wesentlichen in Zusammenbaurichtung miteinander fluchtend und symmetrisch zur Mittellängsachse der Kontakthülse 10 angeordnet sind (vgl. Fig. 7).

Um die Fixierung optimal zu sichern sind auch im Bereich zwischen der elektrischen Kontaktierung der Kontaktbleche 4' und der elektrischen Kontaktierung der Rundkabel 11 Clipsverbindungen 21' vorgesehen, wobei vorliegend vier Federarme am Gehäuseoberteil 20" und vier hiermit zusammenwirkende Hinterschneidungen am Gehäuseunterteil 20' ausgebildet sind.

Diese Clipsverbindungen 21' am Gehäuse 20 bilden eine Art Verschlusssystem zur Sicherung der elektrischen Kontaktierung. Die schräge Anordnung der Stege 24' und 24" stellen auch bei einer gewissen Zugbelastung sicher, dass die elektrische Kontaktierung des Heizelements 2 mit Hilfe der Kontakthülse 10 nicht gestört wird.

Ferner sind am Gehäuseunterteil 20' und am Gehäuseoberteil 20" vorstehende Trennwände 25 ausgebildet, welche die beiden auf den beiden Seiten eines PTC-Elements 3 angeordneten Kontaktbleche 4 und 4' oder 4 voneinander beabstandet halten und sicherstellen, dass zwischen denselben kein Kurzschluss auftritt. Hierbei verlaufen die Trennwände 25 im Gehäuseunterteil 20" rippenartig in Zusammenbaurichtung, während die Trennwände 25 im Gehäuseoberteil 20' als in Zusammenbaurichtung vorstehende Vorsprünge ausgebildet sind.

Für den Zusammenbau wird das elektrische Heizelement 2 mitsamt seiner elektrischen Kontaktierung einschließlich der Rundkabel 11 im Gehäuseunterteil 20' positioniert, anschließend wird das Gehäuseoberteil 20" aufgesetzt und mit Hilfe der Clipsverbindungen 21 und 21' am Gehäuseunterteil 20' fixiert, so dass das Heizelement 2 einschließlich der elektrischen Kontaktierung desselben sicher und gut fixiert im Inneren des Gehäuses 20 eingeschlossen ist.

### Bezugszeichenliste

- 1: Heizungsanordnung
- 2: Heizelement
- 3: PTC-Element
- 4: Kontaktblech
- 4': verlängertes Kontaktblech
- 5: elektrischer Kontakt
- 6: Wellrippe
- 7: Zwischenelement
- 8: Zunge
- 10: Kontakthülse
- 10': erster Bereich
- 10": zweiter Bereich
- 10"': dritter Bereich
- 11: Rundkabel
- 20: Gehäuse
- 20': Gehäuseteil, Gehäuseunterteil
- 20": Gehäuseteil, Gehäuseoberteil
- 21, 21': Clipsverbindung
- 22: Kabeldurchführung
- 23: Positionierungselement
- 24',24": Steg
- 25: Trennwand

## Patentansprüche

1. Elektrische Heizungsanordnung, für ein Kraftfahrzeug, mit einem mindestens zweiteiligen Gehäuse (20), durch welches im Bedarfsfall zu erwärmende Luft strömt, und mindestens einem, durch eine elektrische Kontaktierung elektrisch betreibbaren Heizelement (2), das im Gehäuse (20) angeordnet ist, **dadurch gekennzeichnet, dass** an mindestens zwei Stellen im Gehäuse (20) Positionierungselemente für die elektrische Kontaktierung vorgesehen sind, die elektrische Kontaktierung aber nur auf einer der Stellen angeordnet ist.

2. Elektrische Heizungsanordnung nach Anspruch 1, **dadurch gekennzeichnet, dass** das Gehäuse (20) spiegelsymmetrisch bezüglich einer Mittelquerachse ausgebildet ist, und die Stellen mit Positionierungselementen für eine elektrische Kontaktierung beabstandet von der Mittelquerachse auf beiden Seiten des Gehäuses (20) angeordnet sind.

3. Elektrische Heizungsanordnung nach Anspruch 1 oder 2, **dadurch gekennzeichnet, dass** die elektrische Kontaktierung des Heizelements (2) mit einem Kabel (11) im Gehäuse (20) angeordnet ist.

4. Elektrische Heizungsanordnung nach einem der vorhergehenden Ansprüche, **dadurch gekennzeichnet, dass** zwei Teile (20', 20") des Gehäuses (20) insbesondere mittels mindestens einer Clipsverbindung (21') miteinander verbunden sind.

5. Elektrische Heizungsanordnung nach einem der vorhergehenden Ansprüche, **dadurch gekennzeichnet, dass** die Clipsverbindung (21') seitlich des elektrischen Heizelements (2) im Bereich dessen elektrischer Kontaktierung angeordnet ist.

6. Elektrische Heizungsanordnung nach einem der vorhergehenden Ansprüche, **dadurch gekennzeichnet, dass** im Bereich der elektrischen Kontaktierung vorgesehene Stege (24', 24") in das Gehäuse (20) integriert sind, welche die elektrisch kontaktierenden Elemente fixieren und ein Lösen des elektrischen Kontakts verhindern.

7. Elektrische Heizungsanordnung nach Anspruch 6, **dadurch gekennzeichnet, dass** die Stege (24', 24") in einem Winkel ungleich 0° und 90° zur Längsrichtung der Kontaktbleche angeordnet sind.

8. Elektrische Heizungsanordnung nach Anspruch 6 oder 7, **dadurch gekennzeichnet, dass** der Winkel 45° +/- 20° beträgt, insbesondere etwa 45°.

9. Elektrische Heizungsanordnung nach einem der Ansprüche 6 bis 8, **dadurch gekennzeichnet, dass** die Stege (24', 24") schräg und versetzt bezüglich einer Kabeldurchführung für das Stromkabel angeordnet sind.

10. Elektrische Heizungsanordnung nach einem der vorhergehenden Ansprüche, **dadurch gekennzeichnet, dass** die elektrische Kontaktierung zwischen Kontaktblech (4') und Stromkabel (11) mittels einer Kontakthülse (10) und gegebenenfalls mittels eines Zwischenelements (7), das zwischen Kontaktblech (4') und Kontakthülse (10) angeordnet ist und das Kontaktblech (4') verlängert, erfolgt.

11. Elektrische Heizungsanordnung nach einem der vorhergehenden Ansprüche, **dadurch gekennzeichnet, dass** das elektrische Heizelement (2) mindestens ein PTC-Element (3) umfasst.

12. Elektrische Heizungsanordnung nach Anspruch 11, **dadurch gekennzeichnet, dass** auf beiden Seiten des PTC-Elements (3) Kontaktbleche (4, 4') angebracht sind.

13. Elektrische Heizungsanordnung nach Anspruch 12, **dadurch gekennzeichnet, dass** mindestens zwei Kontaktbleche (4') derart ausgebildet sind, dass sie an ihrem einen Ende als Teil eines Steckers (5) ausgebildet sind.

14. Elektrische Heizungsanordnung nach einem der vorhergehenden Ansprüche, **dadurch gekennzeichnet, dass** das Gehäuse (20) mindestens eine isolierende Trennwand (25) aufweist, welche sicherstellt, dass ein Kurzschluss innerhalb des elektrischen Heizelements (2) vermieden wird.

15. Elektrische Heizungsanordnung nach Anspruch 14, **dadurch gekennzeichnet, dass** die Trennwand (25) am Gehäuseoberteil (20") und am Gehäuseunterteil (20') ausgebildet ist.

16. Elektrische Heizungsanordnung nach Anspruch 14 oder 15, **dadurch gekennzeichnet, dass** die Trennwand (25) zwischen zwei Kontaktbleche (4, 4') in Verlängerung eines dazwischen angeordneten PTC-Elements (3) ragt.

17. Elektrische Heizungsanordnung einem der vorhergehenden Ansprüche, **dadurch gekennzeichnet, dass** das Gehäuse (20) im Bereich, in welchem das elektrische Heizelement (2) angeordnet ist, zweiteilig als Kunststoff-Gehäuse (20) ausgebildet ist.

18. Kraftfahrzeug- Heizungs- und/oder Klimatisierungseinrichtung mit einer elektrische Heizungsanordnung nach einem der vorhergehenden Ansprüche, **dadurch gekennzeichnet, dass** die Kraftfahrzeug-, Heizungs-, und/oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. An electric heater assembly for a motor vehicle having at least one two-part housing (20) through which flows air to be heated when necessary, and at least one heating element (2) which can be operated electrically by means of an electrical contact and is positioned in the housing (20),
**characterised in that**
positioning elements for the electrical contact are provided at at least two points in the housing (20), the electrical contact being positioned at only one of these points.

2. An electric heater assembly in accordance with claim 1,
**characterised in that**
the housing (20) is designed to be mirror symmetrical in relation to a centre transverse axis, and the points with positioning elements for an electrical contact are positioned on either side of the housing (20) a certain distance from the centre transverse axis.

3. An electric heater assembly in accordance with claim 1 or 2,
**characterised in that**
the electrical contact of the heating element (2) with a cable (11) is positioned in the housing (20).

4. An electric heater assembly in accordance with one of the preceding claims,
**characterised in that**
two parts (20', 20") of the housing (20) are connected to one another in particular by means of a clip connection (21').

5. An electric heater assembly in accordance with one of the preceding claims,
**characterised in that**
the clip connection (21') is positioned to the side of the electrical heating element (2) in the area of its electrical contact.

6. An electric heater assembly in accordance with one of the preceding claims,
**characterised in that**
webs (24', 24") provided in the area of the electrical contact are integrated into the housing (20), fix the electrically connecting elements in place and prevent the detachment of the electrical contact.

7. An electric heater assembly in accordance with claim 6,
**characterised in that**
the webs (24', 24") are positioned at angle not equal to 0° or 90° in relation to the length of the contact plates.

8. An electric heater assembly in accordance with claim 6 or 7,
**characterised in that**
the angle is 45° ± 20°, in particular approximately 45°.

9. An electric heater assembly in accordance with claim 6 to 8,
**characterised in that**
the webs (24', 24") are positioned obliquely and offset in relation to a cable bushing for the power cable.

10. An electric heater assembly in accordance with one of the preceding claims,
**characterised in that**
the electrical contact is made between contact plate (4') and power cable (11) by means of a contact sleeve (10) and where appropriate by means of a an intermediate element (7) which is positioned between contact plate (4') and contact sleeve (10) and extends the contact plate (4').

11. An electric heater assembly in accordance with one of the preceding claims,
**characterised in that**
the electrical heating element (2) comprises at least one PTC element (3).

12. An electric heater assembly in accordance with claim 11,
**characterised in that**
contact plates (4, 4') are mounted on either side of the PTC element (20).

13. An electric heater assembly in accordance with claim 12,
**characterised in that**
at least two contact plates (4') are designed in such a manner that one end is designed as part of a plug (5).

14. An electric heater assembly in accordance with one of the preceding claims,
**characterised in that**
the housing (20) has at least one insulating dividing wall (25) ensuring that short-circuits in the electrical heating element (2) are avoided.

15. An electric heater assembly in accordance with claim 14,
**characterised in that**
the dividing wall (25) is configured on the upper housing part (20") and on the lower housing part (20').

16. An electric heater assembly in accordance with claim 14 or 15,
**characterised in that**
the dividing wall (25) projects between two contact plates (4, 4') in extension of a PTC element (3) positioned between them.

17. An electric heater assembly in accordance with one of the preceding claims,
**characterised in that**
in the area in which the electric heating element (20) is positioned the housing (20) is designed in two parts as a plastic housing (20).

18. A motor vehicle heating and/or air conditioning device having an electric heater assembly in accordance with one of the preceding claims,
**characterised in that**
the motor vehicle heating and/or air conditioning device comprises at least one of the following components: heat exchanger, heating element, evaporator, filter, temperature mixing valve, mixing chamber, one or more flow channels and one or more control valves for distributing the air to the discharge channels.

## Revendications

1. Ensemble de chauffage électrique pour un véhicule automobile, avec un boîtier (20) au moins en deux parties à travers lequel circule si nécessaire de l'air à réchauffer, et au moins un élément de chauffe (2) pouvant être actionné électriquement par un contact électrique, l'élément de chauffe étant disposé dans le boîtier (20), **caractérisé en ce qu'**à au moins deux emplacements du boîtier (20) sont prévus des éléments de positionnement pour le contact électrique, le contact électrique étant disposé toutefois à un seul des emplacements.

2. Ensemble de chauffage électrique selon la revendication 1, **caractérisé en ce que** le boîtier (20) est configuré symétrique par rapport à un axe transversal central, et les emplacements avec les éléments de positionnement pour un contact électrique sont disposés à distance de l'axe transversal central des deux côtés du boîtier (20).

3. Ensemble de chauffage électrique selon la revendication 1 ou 2, **caractérisé en ce que** le contact électrique de l'élément de chauffe (2) avec un câble (11) est disposé dans le boîtier (20).

4. Ensemble de chauffage électrique selon l'une quelconque des revendications précédentes, **caractérisé en ce que** deux parties (20', 20") du boîtier (20) sont reliées l'une à l'autre au moyen d'au moins une liaison par encliquetage (21').

5. Ensemble de chauffage électrique selon l'une quelconque des revendications précédentes, **caractérisé en ce que** la liaison par encliquetage (21') est disposée sur le côté de l'élément de chauffe électrique (2) dans la zone de son contact électrique.

6. Ensemble de chauffage électrique selon l'une quelconque des revendications précédentes, **caractérisé en ce que** des brides (24', 24") prévues dans la zone du contact électrique sont intégrées dans le boîtier (20), lesquelles fixent les éléments entrant en contact électrique et évitent un détachement du contact électrique.

7. Ensemble de chauffage électrique selon la revendication 6, **caractérisé en ce que** les brides (24', 24") sont disposées à un angle variable de 0° et 90° par rapport au sens longitudinal des tôles de contact.

8. Ensemble de chauffage électrique selon la revendication 6 ou 7, **caractérisé en ce que** l'angle est de 45°+/-20°, en particulier d'environ 45°.

9. Ensemble de chauffage électrique selon l'une quelconque des revendications 6 à 8, **caractérisé en ce que** les brides (24', 24") sont disposées en biais et décalées par rapport à un passage de câbles pour le câble électrique.

10. Ensemble de chauffage électrique selon l'une quelconque des revendications précédentes, **caractérisé en ce que** le contact électrique entre la tôle de contact (4') et le câble électrique (11) a lieu au moyen d'une douille de contact (10) et éventuellement au moyen d'un élément intermédiaire (7) qui est disposé entre la tôle de contact (4') et la douille de contact (10) et prolonge la tôle de contact (4').

11. Ensemble de chauffage électrique selon l'une quelconque des revendications précédentes, **caractérisé en ce que** l'élément de chauffe électrique (2) comprend au moins un élément à coefficient de température positive (3).

12. Ensemble de chauffage électrique selon la revendication 11, **caractérisé en ce que** des tôles de contact (4, 4') sont disposées des deux côtés de l'élément à coefficient de température positive (3).

13. Ensemble de chauffage électrique selon la revendication 12, **caractérisé en ce qu'**au moins deux tôles de contact (4') sont formées de sorte qu'elles sont configurées à une de leur extrémité comme une partie d'une fiche (5).

14. Ensemble de chauffage électrique selon l'une quelconque des revendications précédentes, **caractérisé en ce que** le boîtier (20) comprend au moins une cloison isolante (25) qui garantit l'absence d'un court-circuit à l'intérieur de l'élément de chauffe électrique (2).

15. Ensemble de chauffage électrique selon la revendication 14, **caractérisé en ce que** la cloison (25) est configurée sur la partie supérieure de boîtier (20") et sur la partie inférieure de boîtier (20').

16. Ensemble de chauffage électrique selon la revendication 14 ou 15, **caractérisé en ce que** la cloison (25) entre deux tôles de contact (4, 4') dépasse dans le prolongement d'un élément à coefficient de température positive (3) disposé entre les deux tôles.

17. Ensemble de chauffage électrique selon l'une quelconque des revendications précédentes, **caractérisé en ce que** le boîtier (20) est conçu en deux parties comme un boîtier en plastique (20) dans la zone dans laquelle se trouve l'élément de chauffe électrique (2).

18. Installation de chauffage et/ou de climatisation de véhicule automobile avec un ensemble de chauffage électrique selon l'une quelconque des revendications précédentes, **caractérisée en ce que** l'installation de chauffage et/ou de climatisation de véhicule automobile comprend au moins un des composants suivants : échangeur thermique, corps de chauffe, évaporateur, filtre, volet de mélangeur thermique, chambre de répartition d'air, un ou plusieurs canaux hydrauliques et un ou plusieurs volets de commande pour répartir l'air sur les canaux de sortie.
